# EUROPEAN PATENT APPLICATION

(11) **EP 2 100 866 A2**
(43) Date of publication of application: **16.09.2009**
(21) Application number: 09386006.2
(22) Date of filing: 10.03.2009
(51) Int. Cl.: C05F 17/00, C05F 17/02, C05F 9/04

(54) **Worm composter**

(30) Priority: 13.03.2008 GR 20080100165
(71) Applicant: Kolevris, George, 21200 Argos (GR)
(72) Inventor: Kolevris, George, 21200 Argos (GR)

(57) **Abstract**

A High Yield Composting device , (vermicomposter), with help of composting worms. Achieving optimum operation conditions. Equipped with electronic control system .Energy free, without gas emissions. Converts organic wastes to humus without need of a shredder machine.

## Description

The invention concerns a home composting device that recycles the organic fragment of household waste producing stabilized quality compost.

The state of the art includes composting, as a known method of aerobic treatment of organic waste. It is also known as an alternative to other mechanical methods-batch process of waste treatment, (incineration - gasification - pyrolysis - plasma). Disadvantage of this method is slow process (roughly 4-6 months) necessity of chopping the waste and skilled operator. Devices for small scale - home composting (composters) are a lot in the market.

The state of the art also includes a special, and more efficient way of composting that with the help of surface worms, (epigeic worms) mainly with species eisenia foetida, rubricus rubellus, perionyx excavatus. This method is known as vermicomposting.
Devices for small scale- home vermicomposting (vermicomposters) are mainly manufactured from round or rectangular buckets-bins that sit one over the other in a vertical stack with holes in bottom of each bucket. The operator removes the lower bucket with finished product ,unloads the content and plases it to the top of the stack.

The present invention seeks to provide a boost to overall process, an easier way of handling without the necessity of chopping the disposal material .Moreover has high efficiency rate (360kg-450kg/year), is energy free and has no environment impact.. It is in compliance with LULUCF directive of Kyoto protocol, about gas emissions. By the aspect that invention is considered a continuous flow reactor and the diversion of organic waste to compost lasts approx 30 days the invention fulfils the directive of National Organic Standards Board, Compost Task Force ,recommendation / USDA, April 18, 2002 (duration 30-60 days for pathogens reduction). The final product meets all standards for compost A+ classification.

The embodiment is described below with the help of attached figures.

### Description

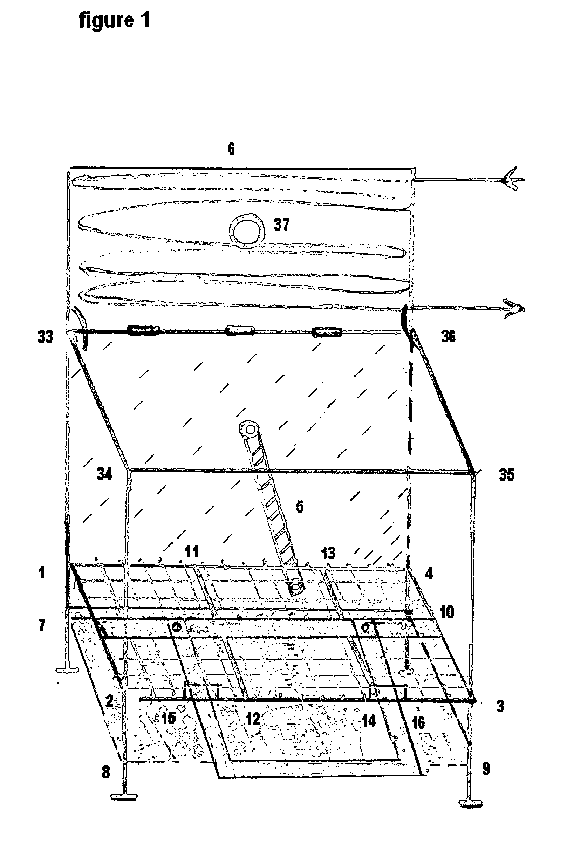

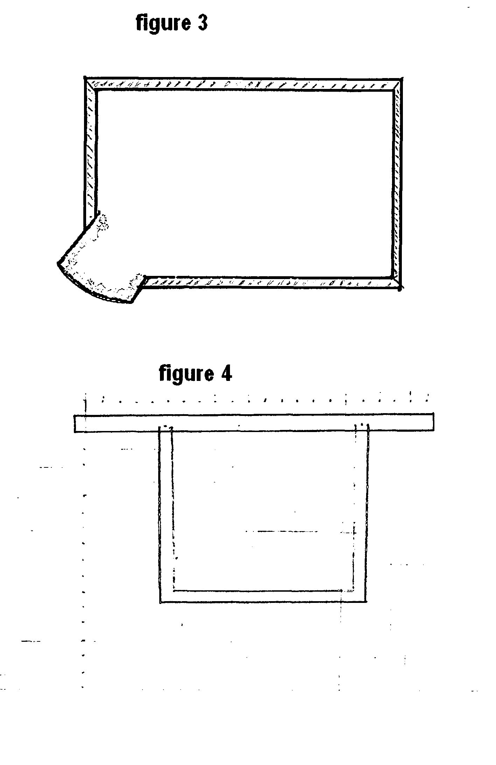

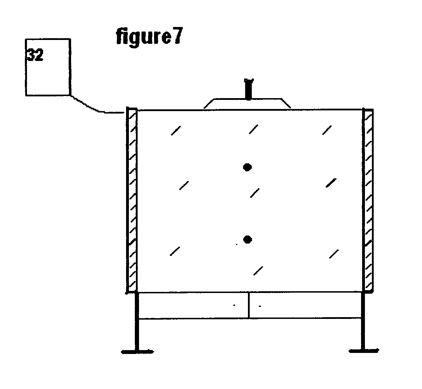

In figure 1 is presented the whole invention.
It is constructed, as a frame of height 0,50 cm - 100 cm, (at preference, 0,90 cm), length 100 cm , and width 0,50 cm -100 cm.(1,2,3,4,33,34,35,36) It is found that these are the optimum dimensions but can be also different. The frame, is manufactured from plastic sheets or wood or iron sheets or stainless steel or plywood having thickness of 10 mm -60 mm. It is insulated outside with cardboard or other insulating material around, and above. (Fig 7). On upper side a lid (6), is placed which is opened, with the help of joints, and closes hermetically with clips. Alternatively the frame can be constructed from four iron bars in conjunction with above sheets (7,1,33),(8,2,34),(9,3,35),(10,4,36).The box (1,2,3,4,33,34,35,36) that is created respectively has the same dimensions as above.
The frame on the front surface is crossed by a traverse perforated pipe from iron or stainless steel or plastic or copper 30 mm - 50 mm in diameter (5) that extends till the opposite (back) side. The main purpose of that pipe is to bring fresh air to the centre of the apparatus in order to maintain aerobic conditions .In addition a stream of air is produced towards upper side due to thermal production at decomposition phase. That speeds up the overall process. The pipe has two nuts that lock the front and back side of embodiment (bigger dimension) in order to offer more support to these sides of the construction. Alternatively for bigger height of construction, more parallel pipes running, at height, in distances per 30 cm between them. The pipe or pipes respectively, are covered with anti-mosquito mesh. That mesh prohibits the undesirable creature's intrusion. Inside that pipe or pipes, a low volt electric resistance is placed in order to provide heat in extreme cold weather conditions.
The all frame is sit on a constant base, (1,2,3,4) constructed from iron or stainless steel bars. That base every 30 cm of length brings additional traverse joint bars (11,12), (13,14) for more compact construction and resistance in load. Between frame and base, a mesh of stainless steel or coated iron is placed 5 mm in thickness. That mesh has square or rectangular holes of 50 mm - 60 mm dimension. On the mesh is placed a
stainless steel or iron bar of "II" shape which can move frontward and backward inside the frame limits. Detailed presentation of mesh and bar is provided in figure 4. As shown in figure 1, the arms of bar, penetrate the frame, via 2 holes with little clearance(15,16) in the down part of frame. Below the mesh a base is welded from metal sheet (7,8,9,10).
The base space (7,1),(8,2),(9,3),(10,4) is covered externally with metal sheet or plywood sheet in order that under the frame, and above the bottom sheet-metal a closed space is created for the collection of finished product. This space brings two opposite front doors. The two side covers can be raised and removed in order that the apparatus is extended with other similar apparatus in row.
The joints of metal frame are welded (massive construction) or screwed, (except the base 1,2,12,14,3,4,13,11 that is welded) for modular construction and extension.
On the upper cover exists a hole 70 mm. in diameter,(37) above which a box is placed with mesh, for the ventilation and bad smells elimination. Below the cover, water pipes with automate flow system in zigzag pattern are running, in case the system needs additional humidity supplies from outside source. The source can be a urban water piping network or autonomous water tank (32,Figure 7).
For the collection of ready compost product, a metal or plastic tray exists under the mesh area (1,2,3,4) placed on the lower surface (7,8,9,10) with same dimensions .That brings elevated lips 5 cm approx. Detailed presentation of tray is provided in figure 3. The tray in frond end has groove, so as to facilitate unload of ready product in bags. Also this tray collects liquid compost - compost tea from surplus water in the apparatus.

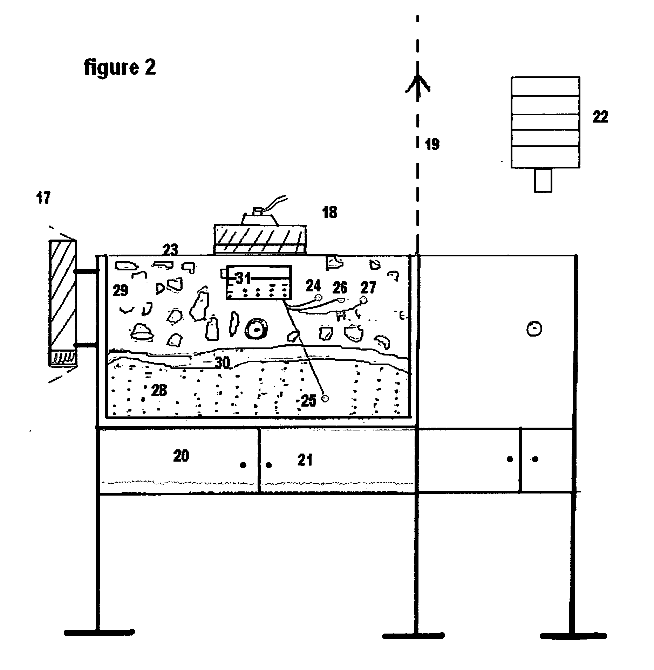

In figure 2 a cut view of the embodiment is presented

In the box of the upper cover (18), ready compost or active carbon granule filter or active carbon sponge (23) is added, in order fermentation gases to be trapped, like methane (CH 4), nitrous oxides (NOx), carbon dioxide (CO2). Above this box, a fan can be placed (with electric or solar source) for rejecting heat, if is needed, produced due to biochemical reactions, or due to increase of outside temperature.
In that cut view, three zones of reaction are represented (28,30,29).The first zone (29) consists of recently placed litter that is unprocessed household waste . Precisely below (30) the treatment area-zone is presented, plenty of micro-organisms and worms. Under the treatment area, is the processed area (28) with ready to collect compost. These zones are created due to physiology of worms to move towards the fresh litter continuously and consequently to upper zones.
For better operation and monitoring and as an option, the apparatus is equipped with electronic Control unit with LCD panel (31) and sensors for humidity (24), temperature (26), PH, (27) and ORS (oxygen reduction sensor, 25, for the control of microbial activity).
The side covers (19) can be raised and removed in order that the apparatus can extend with other similar apparatus in row, as said above in figure 1.
In the same figure the two opposite front doors (20,21) of the base space are shown.
These doors isolate the collection room from out side and especially from rut's or bird's intrusion.
The embodiment brings an external sterilization box (17) that operates with electric resistance in case the litter needs to be sterilized before composting for pathogens reduction.

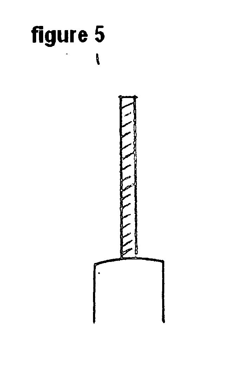

In figure 5 a necessary element of apparatus is viewed.
It is that of stirring the litter component, with two metal nails when occasionally cavitation is observed, after the collection of finished compost.

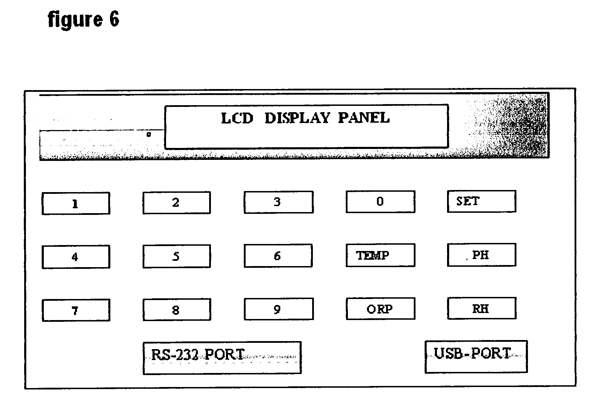

In figure 6 the electronic unit more analytically is shown.
The unit is composed from LCD panel, keyboard and processor (AVR, ATMEL, INTEL etc.) for autonomous operation with batteries as well as with ports RS -232, RS -484, USB, for PC communication. The same unit checks the water supplies and the fan's function.

## Claims

**1.** A small scale composting device, with the help of worms. Said device constructed, from a frame of height 0,50 cm - 100 cm, (at preference, 0,90 cm), length 100 cm , and width 0,50 cm -100 cm. (1,2,3,4,33,34,35,36, Fig1) The dimensions can be also different. The frame, is manufactured from plastic sheets or wood or iron sheets or stainless steel or plywood having thickness of 10 mm -60 mm. It is insulated outside with cardboard or other insulating material around , and above . (Fig 7). On upper side a lid (6fig1), is placed which is opened, with the help of joints, and closes hermetically with clips. Alternatively the frame can be constructed from four iron bars in conjunction with above sheets(7,1,33),(8,2,34),(9,3,35),(10,4,36), (Fig1).The box (1,2,3,4,33,34,35,36,Fig1) that is created has the same dimensions as above.
The frame on the front surface, is crossed by a traverse perforated pipe from iron or stainless steel or plastic or copper 30 mm - 50 mm in diameter(5, Fig 1), that extends till the opposite (back) side. The pipe has two nuts that lock the front and back side (bigger dimension) in order to offer more support to these sides of the construction. For bigger height of construction, exist more parallel pipes running , at height , in distances per 30 cm between them. The pipe or pipes respectively, are covered with anti-mosquito mesh.
The all frame is sit on a constant base, (1,2,3,4, Fig 1) constructed from iron or stainless steel bars. That base every 30 cm of length brings additional traverse joint bars (11, 12,13,14, Fig 1) for more compact construction and resistance in load. Between frame and base, a mesh of stainless steel or coated iron is placed 5 mm in thickness. That mesh has square or rectangular holes of 50 mm - 60 mm. dimension (Fig 1). On the mesh is placed a stainless steel or iron bar of "Π" shape which can move frontward and backward inside the frame limits. The arms of bar, penetrate the frame, via 2 holes in the down part of frame .(15,16,Fig 1).Below the mesh a base is welded from metal sheet (7,8,9,10, Fig 1).
The base space (7,1,8,2,9,3,10,4,Fig1) is covered externally with metal sheet or plywood sheet in order that under the frame, and above the sheet-metal a closed space is created for the collection of finished product . This space brings two opposite front doors (20,21 Fig 2).The two side covers of said device can be raised and removed in order that the said device can be extended with other similar said devices in row.(19, fig 2).
On the upper cover exists a hole 70 mm. in diameter. (37, Fig 1), above which a box is placed with mesh, for the ventilation and bad smells elimination . In this box (18, Fig 2) ready compost or carbon filter is added , in order fermentation gases to be trapped , like methane (CH 4), nitrous oxides (NOx), carbon dioxide (CO2). Above this box, a fan can be placed (with electric or solar source) for rejecting heat, if it is necessary , due to biochemical reactions, or due to increase of outside temperature.
Below the cover , water pipes (Fig 1), with automate flow system in zigzag pattern are running , in case the said device needs additional humidity supplies from outside source.
For better operation and monitoring and as an option , the said device is equipped with electronic Control unit and sensors for humidity (24,Fig 2), temperature (26,Fig 2,), PH, (27Fig 2,) and ORS (25,Fig 2). The said electronic Control unit is composed from lcd panel, keyboard and processor (AVR, ATMEL, INTEL etc.) for autonomous operation with batteries as well as with ports RS -232, RS -484, USB, for PC communication. The same said electronic Control unit checks the water supplies and the fan's function.
For collection of the ready product, a flat metal or plastic tray under the mesh, exists, of same shape with the said device (Fig 3), with elevated lips 5 cm approx. In frond end the said tray has groove, (Fig 3), so as to facilitate the unload of ready product in bags. Also this said tray collects liquid compost - compost tea from exaggerated water in the said device.
The joints of metal frame are welded (massive construction) or screwed, (except the base that is welded) for modular construction and extension

**2.** Device as in claim 1, **characterized in that** said frame of height 0,50 cm - 100 cm, (at preference, 0,90 cm), length 100 cm , and width 0,50 cm -100 cm(1,2,3,4,33,34,35,36, Fig1). The dimensions can be also different. The said frame, is manufactured from plastic sheets or wood or iron sheets or stainless steel or plywood having thickness of 10 mm -60 mm. It is insulated outside with cardboard or other insulating material around , and above . (Fig 7). On upper side a lid (6,fig1), is placed which is opened, with the help of joints, and closes hermetically with clips. Alternatively the said frame can be constructed from four iron bars in conjunction with above sheets (7,1,33,8,2,34,9,3,35,10,4,36,Fig1).The box (1,2,3,4,33,34,35,36,Fig1) that is created has the same dimensions as above.

**2.** Device as in claim 1, **characterized in that** said collection system of ready product, consists of:
A) A constant base, (1,2,3,4, Fig 1) constructed from iron or stainless steel bars.
B) A mesh that sits on the above base, made from stainless steel or coated iron 5 mm in thickness. That mesh has square or rectangular holes of 50 mm - 60 mm. dimension (Fig 1).
C) A stainless steel or iron bar of "Π" shape which can move frontward and backward inside the frame(base) limits. The arms of bar, penetrate the frame, via 2 holes. (Fig 1).

**3.** Device as in claim 1, **characterized in that** said filter - box (18,fig2). In this box (18, Fig 2) ready compost or carbon filter is added , in order fermentation gases to be trapped , like methane (CH 4), nitrous oxides (NOx), carbon dioxide (CO2).

**4.** Device as in claim 1, **characterized in that** said electronic unit system, equipped with sensors for humidity (24,Fig 2), temperature (26,Fig 2,), PH, (27Fig 2,) and ORS (25,Fig 2). The said electronic unit is composed from lcd panel, keyboard and processor (AVR, ATMEL, INTEL etc.) for autonomous operation with batteries as well as with ports RS -232, RS -484, USB, for PC communication.

**5.** Device as in claim 1, **characterized in that** said extensibility of device, which means that the two side covers can be raised and removed in order that the device can be extended with other similar devices in row.(19, fig 2).

**6.** Device as in claim 1, **characterized in that** said stirring component as shown in (Fig 5).
